# EUROPEAN PATENT APPLICATION

(11) **EP 1 501 307 A2**
(43) Date of publication of application: **26.01.2005**
(21) Application number: 04017072.2
(22) Date of filing: 20.07.2004
(51) Int. Cl.: H04N 7/18

(54) **Intercommunication apparatus**

(30) Priority: 22.07.2003 IT MI20030347
(71) Applicant: Elvox Costruzioni Elettroniche S.p.A., 35133 Padova (IT)
(72) Inventor: Miozzo, Orlando, 35133 Padova (IT)
(74) Representative: Cicogna, Franco

(57) **Abstract**

An intercommunication apparatus comprises a box-like body which can be mounted on a wall or other fixed supporting element and is designed for containing at least a push-button assembly and at least a screen, and being characterized in that said screen can be swingably or tiltably driven, so as to be arranged in an easy visible position.

## Description

### BACKGROUND OF THE INVENTION

The present invention relates to an intercommunication system apparatus construction.

Intercommunicating systems, allowing a person in a house to talk with another person at an inlet door of the house, are already known.

Moreover, are already known the so-called video-intercommunication systems allowing, by a video-camera arranged at an inlet of the house, to transmit images to a video-intercommunication apparatus arranged in a room of the house.

More specifically, the intercommunication system inside the house usually comprises a video-screen and a push-button or key assembly for controlling the conversation and the remote opening of the door.

For properly mounting the intercommunication apparatus, it is necessary to arrange said apparatus at a level to be easily used by different height persons, children included, and this in particular for the video-screen or display, which has usually a comparatively large size and, which, accordingly, must be seen at a close distance and under a proper visual angle.

### SUMMARY OF THE INVENTION

Accordingly, the aim of the present invention is to provide such an intercommunication apparatus construction which is adapted to overcome the above mentioned drawbacks of prior like intercommunication systems.

Within the scope of the above mentioned aim, a main object of the present invention is to provide such an intercommunication apparatus which includes a video screen or display which can be easily seen from different height persons.

Another object of the present invention is to provide such an intercommunication apparatus which is very reliable in operation and which, moreover, has a nice aesthetical aspect.

Yet another object of the present invention is to provide such an intercommunication apparatus construction which can be made by available materials and machines.

According to one aspect of the present invention, the above mentioned aim and objects, as well as yet other objects, which will become more apparent hereinafter, are achieved by an intercommunication apparatus construction, comprising a box-like body, which can be mounted on a wall or other fixed supporting element, and adapted to contain at least a push-button or key assembly and at least a display screen, characterized in that said display screen is adapted to perform swinging movements.

### BRIEF DESCRIPTION OF THE DRAWINGS

Further characteristics and advantages of the present invention will become more apparent hereinafter from the following detailed disclosure of a preferred, though not exclusive, embodiment of the invention, which is illustrated, by way of an indicative but not limitative example, in the accompanying drawings, where:

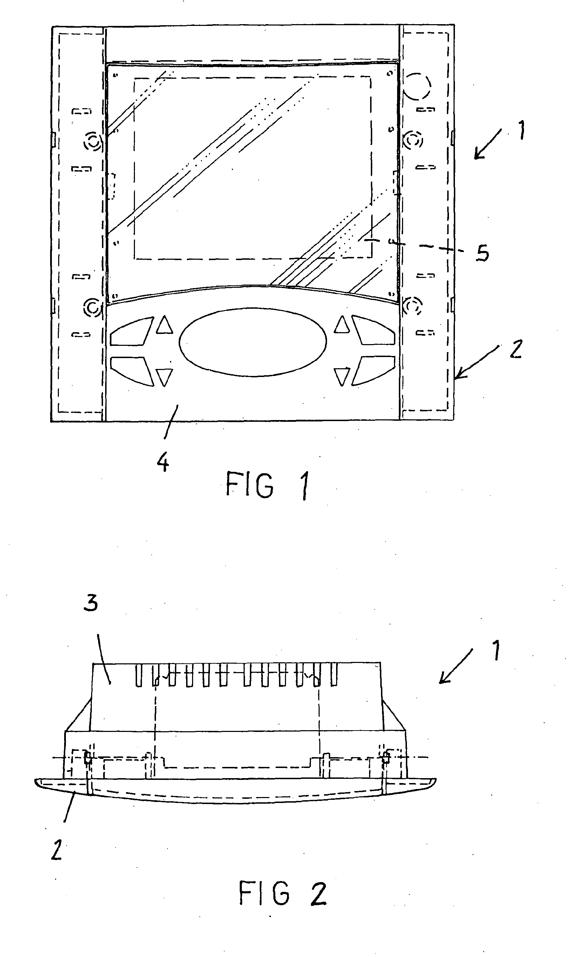

Figure 1 is a front elevation view of the intercommunication apparatus construction according to the present invention;
Figure 2 is a top plan view of the intercommunication apparatus construction according to the invention;

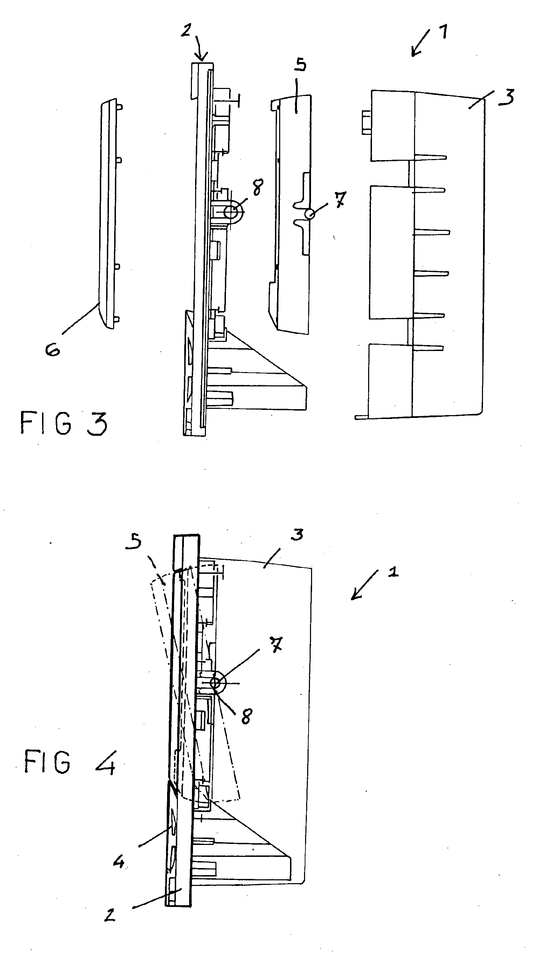

Figure 3 is an exploded, side elevation view, of the intercommunication apparatus construction;
Figure 4 is a side elevation view of the intercommunication construction, specifically showing the swinging movement of the display screen;
   and

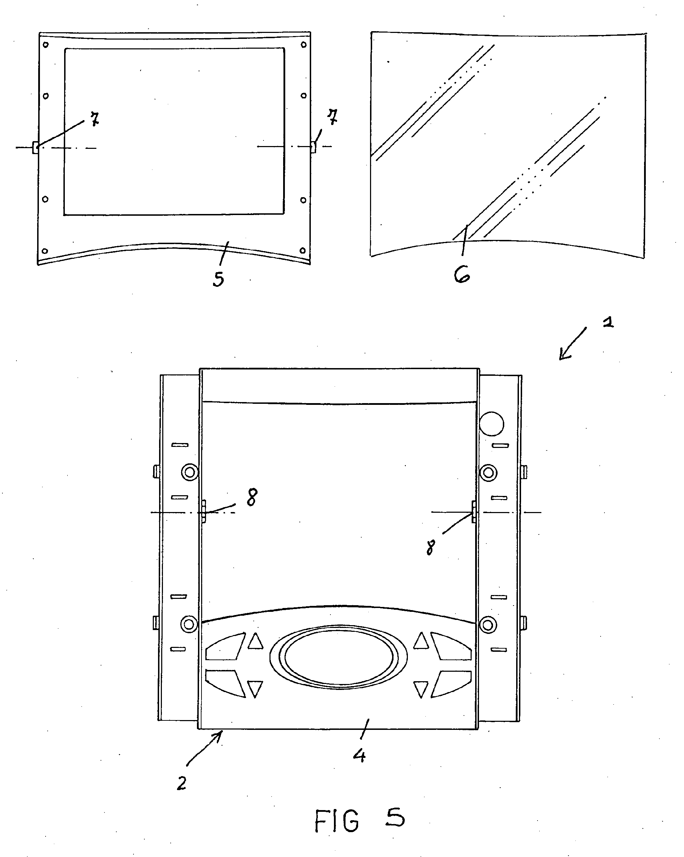

Figure 5 is a front exploded view of the intercommunication apparatus construction according to the invention.

### DESCRIPTION OF THE PREFERRED EMBODIMENT

With reference to the number references of the above mentioned figures, the intercommunication apparatus construction according to the present invention, which has been generally indicated by the reference number 1, comprises a box-like body, including a front panel 2, closed at the rear thereof by a cover 3.

The front panel 2 comprises a push-button assembly 4 and supports a swinging display screen 5.

Said swinging display screen is advantageously constituted by a flat type of video screen or display, for example of a liquid crystal type, and comprises pivot means, including pivot pins 7, designed for engaging respective recesses 8 formed on the front panel.

Advantageously, the display screen 5 further comprises a transparent protective panel 6.

The operation of the intercommunication apparatus construction according to the present invention is substantially similar to the operation of a conventional intercommunication apparatus and is controlled by the push-button assembly 4.

According to the present invention, the user can, at any desired times, to incline or tilt the display screen 5 either upward or downward for direct it in the most convenient manner, for easily seeing the images.

It has been found that the invention fully achieved the intended aim and objects.

In fact, the invention provides an intercommunication apparatus construction the display screen of which can be easily directionally driven, to be easily seen by the user.

In particular, it should be apparent that different height persons can easily see the display screen, by simply arranging it with the proper inclination.

The use of a thin display screen, for example of a liquid crystal or the like type, will allow to provide a small size construction, while providing the display screen with an inclination angle within a broad angle range.

In practicing the invention, the used materials, as well as the contingent size and shapes, can be any, depending on requirements.

## Claims

1. An intercommunication apparatus construction, comprises a box-like body which can be mounted on a wall or other fixed supporting element and being adapted to contain at least a push-button assembly and at least a display screen, **characterized in that** said display screen can be swingably driven.

2. A construction according to claim 1, **characterized in that** said box-like body comprises a front panel closed at a rear thereof by a cover.

3. A construction according to claim 2, **characterized in that** said front panel supports said push-button assembly and said swinging display screen.

4. A construction, according to one or more of the preceding claims, **characterized in that** said swinging display screen comprises a flat type of video screen, for example a liquid crystal video screen.

5. A construction, according to one or more of the: preceding claims, **characterized in that** said swinging display screen comprises pivot means including pivot pins adapted to engage in respective recesses formed in said front panel.

6. A construction, according to one or more of the preceding claims, **characterized in that** said swinging display screen comprises a clear protective panel therefor.
